# EUROPÄISCHE PATENTSCHRIFT

(11) **EP 2 315 648 B1**
(45) Veröffentlichungstag und Bekanntmachung des Hinweises auf die Patenterteilung: **06.06.2012**
(21) Anmeldenummer: 09776031.8
(22) Anmeldetag: 30.07.2009
(51) Int. Cl.: B25J 9/12, B23Q 1/48, H02K 41/03, H02K 11/00

(54) **ANTRIEBSEINHEIT MIT EINEM ERSTEN UND EINEM ZWEITEN MOTOR**
DRIVE UNIT WITH A FIRST AND A SECOND MOTOR
UNITÉ D'ENTRAÎNEMENT COMPRENANT UN PREMIER ET UN DEUXIÈME MOTEURS

(30) Priorität: 14.08.2008 DE 102008037707
(43) Veröffentlichungstag der Anmeldung: 04.05.2011
(73) Patentinhaber: Schaeffler Technologies AG & Co. KG, 91074 Herzogenaurach (DE); INA Drives & Mechatronics GmbH & Co. oHG, 98527 Suhl (DE)
(72) Erfinder: NEUFELD, Daniel, 91074 Herzogenaurach (DE); SCHMID, Günter, 90475 Nürnberg (DE); SCHÜLER, Ralf, 98530 Wichtshausen (DE)
(86) Internationale Anmeldenummer: PCT/DE2009/001061
(87) Internationale Veröffentlichungsnummer: WO 2010/017800

(56) Entgegenhaltungen:
- EP-A- 0 797 287
- WO-A-01/89773
- DE-U1-202004 015 097
- GB-A- 2 097 197
- US-B1- 6 211 591

## Beschreibung

### Gebiet der Erfindung

Die vorliegende Erfindung betrifft eine Antriebseinheit zum rotativen und linearen Bewegen eines Arbeitselements gegenüber einem ersten Gehäuseelement, wobei die Antriebseinheit einen ersten und einen zweiten Motor umfasst.

### Hintergrund

Derartige Antriebseinheiten, die es ermöglichen, zwei Objekte relativ zueinander zu verdrehen und gleichzeitig und/oder unabhängig davon relativ zueinander linear zu verfahren, können in vielfältigen Anwendungen zum Einsatz kommen.

Ein typisches Einsatzgebiet stellen Schraubverschließer, die in Anlagen zum automatischen Verschließen von Getränkebehältnissen verwendet werden, dar. Hierfür wird das Arbeitselement, typischerweise eine rotationssymmetrische Welle, mit einem Verschließkopf bezüglich der Rotationsachse des Arbeitslements drehfest und axial verschiebefest gekoppelt. Der Verschließkopf ist an die Form der jeweiligen Getränkebehältnisse, wie PET- oder Glasflaschen angepasst. Indem das Arbeitselement und somit der Verschließkopf rotativ bzw. linear gegenüber dem ersten Gehäuseelement verfährt, kann das Getränkebehältnis, das gegenüber dem ersten Gehäuseelement unbeweglich angeordnet ist, verschlossen werden. Hierbei muss sichergestellt werden, dass der Verschlussdeckel bis auf seine Endlage aufgeschraubt wird, so dass die Flüssigkeit innerhalb des Getränkebehältnisses bis zum zugesagten Verfallsdatum hinreichend gut gegen Umgebungseinflüsse, wie Umgebungsluft und Keime, abgedichtet ist. Zudem muss der sogenannte Siegelring beschädigungsfrei gehandhabt werden und formschlüssig aufschnappen. Außerdem darf das Aufschraubmoment für den Benutzer der Flasche nicht unzulässig hoch werden. Die Ausbringleistung von solchen Schraubverschließem kann bis zu 65.000 Flaschen pro Stunde betragen.

Ein weiteres Anwendungsgebiet für gattungsgemäße Antriebseinheiten stellt das Verschrauben von zwei oder mehreren Maschinenteilen, die mit jeweils einem Innen- beziehungsweise Außengewinde oder einer Durchgangsbohrung versehen sind, dar. Beispielhaft sei hier das Eindrehen von Schrauben in Gewindebohrungen erwähnt, wobei in dieser Anwendung auch oftmals eine Prozessüberwachung hinsichtlich des Einschraubdrehmoments erforderlich ist, z.B. bei sicherheitsrelevanten Bauteilen in der Fahrzeug- oder Luftfahrzeugindustrie.

Weitere Anwendungsfelder gattungsgemäßer Antriebseinheiten finden sich in der Automatisierungstechnik, wie zum Beispiel in Montage- und Prüfungsautomaten, oder in der Productronic, wie beispielsweise in Bestückungsautomaten oder in In-Circuit-Testern.

Eine gattungsgemäße Antriebseinheit ist aus der GB 2097197 bekannt, wobei diese Vorrichtung zum rotativen und linearen Bewegen eines Arbeitselements einen Linearmotor, einen Rotativmotor und Lagermittel aufweistDie eine Gewindespindel und eine Gewindemutter umfassenden und einem der beiden Motoren zugeordneten Lagermittel erlauben es, dass trotz einer linearer Bewegung des Arbeitselements gegenüber einem Gehäuseteil der Primär- und der Sekundärteil dieses Motors zueinander axial verschiebefest ausgebildet werden können. Wie leicht einzusehen ist, Hat diese Ausbildung des Linearantriebs den Vorteil großer Kompaktheit, da er gegenüber einem Motor in der Form eines konventiellen Drehantriebs im Wesentlichen die gleiche axiale Erstreckung beansprucht. Gleichwohl wird der gattungsmäßige Antrieb als nachteilig erachtet, weil zu dessen Realisierung nicht nur eine drehfeste Kopplung des Rotativmotors zum Arbeitselement geschaffen werden muß, sondern gleichzeitig auch eine solche, die ein axiales Verfahren des Arbeitselements unter Wirkung des Linearantriebs erlaubt.

### Aufgabe der Erfindung

Der vorliegenden Erfindung liegt die Aufgabe zu Grunde, eine Antriebseinheit der Eingangs genannten Art zu schaffen, welche die genannten Nachteile überwindet.

### Zusammenfassung der Erfindung

Diese Aufgabe wird erfindungsgemäß durch die Merkmale des unabhängigen Anspruchs gelöst.

Demzufolge zeichnet sich eine erfindungsgemäße Antriebseinheit zum rotativen und linearen Bewegen eines Arbeitselements gegenüber einem ersten Gehäuseelement, wobei die Antriebseinheit einen ersten und einen zweiten Motor umfasst, durch Lagermittel aus, die eine erste Gewindespindel und eine erste Gewindemutter sowie eine zweite Gewindespindel und zweite Gewindemutter umfassen, wobei alle Gewindemuttern bezüglich dem ersten Gehäuseelement axial verschiebefest angeordnet und drehfest mit dem Primär- oder Sekundärteil des jeweiligen Motors gekoppelt sind. Durch die Verwendung gleicher Bauteile sowohl für den Linear- als auch für den Rotativmotor wird nicht nur eine Standardisierung geschaffen, sondern auch wartungsintensive Linearlager vermieden.

Ein Aspekt der Erfindung ist dadurch verwirklicht, dass wie im Stand der Technik die Lagermittel eine erste Gewindespindel und eine erste Gewindemutter umfassen, wobei die erste Gewindemutter bezüglich dem ersten Gehäuseelement axial verschiebefest angeordnet ist und drehfest mit dem Primärteil oder dem Sekundärteil des ersten Motors gekoppelt ist.

Die Gewindespindel kann in Zusammenwirkung mit der Gewindemutter eine Rotationsbewegung in eine translatorische Bewegung umsetzen. Die Erfindung macht sich dabei zu Nutze, dass eine translatorische bzw. lineare Bewegung der Gewindespindel ausschließlich durch Drehen der Gewindemutter erreicht werden kann. Die Gewindemutter muss somit lediglich drehbar um eine Achse der Gewindespindel gelagert werden und kann bezüglich der Achse der Gewindespindel axial verschiebefest angeordnet werden.

Erfindungsgemäß soll die Gewindemutter nun axial verschiebefest bezüglich dem ersten Gehäuseelement angeordnet werden. Eine translatorische Bewegung der Gewindespindel kann somit erreicht werden, ohne dass dazu das anzutreibende Maschinenelement, nämlich die Gewindemutter, gegenüber dem ersten Gehäuseelement axial verschoben werden muss.

Durch die Kopplung des ersten Motors mit der Gewindespindel und der Gewindemutter, insbesondere, indem die Gewindemutter mit dem Primärteil oder dem Sekundärteil des ersten Motors drehfest gekoppelt ist, ist eine axiale Verschiebbarkeit von Primärteil gegenüber Sekundärteil bei einer linearen Bewegung des Arbeitselements nicht notwendig. Daher kann die axiale Erstreckung des Primärteils und des Sekundärteils des ersten Motors gleich lang gewählt werden. Die Kosten für das Primärteil beziehungsweise für das Sekundärteil und somit für den ersten Motor insgesamt werden damit reduziert, die Konstruktion sowie der Einbau vereinfacht und der axiale Bauraum des Motors reduziert.

Vorteilhaft ist weiterhin, dass durch die Steigung der Gewindespindel bzw. der Gewindemutter eine bestimmte Übersetzung zwischen Motordrehzahl und Geschwindigkeit des Arbeitselements erreicht wird. Durch Wahl der entsprechenden Steigung ist es somit möglich, den Motor bei gegebener Geschwindigkeit des Arbeitselements nahe oder in seinem optimalen Arbeitspunkt zu betreiben.

Gemäß einen Ausführungsform der Erfindung ist der erste Motor ein erster Torquemotor. Bei einem Torquemotor handelt es sich um einen Rotativmotor, d.h. es wird eine Drehbewegung erzeugt. Das Primärteil und das Sekundärteil sind konzentrisch zueinander angeordnet. Im allgemeinen sind diese Motortypen eisenbehaftet und genutet. Es sind jedoch auch alternativ eisenlose Motoren einsetzbar. Denkbar ist einerseits eine Bauweise als Innenläufer, d.h. der Stator ist radial außerhalb des Rotors angeordnet. Denkbar ist selbstverständlich auch eine Bauweise als Außenläufer, d.h. der Rotor ist radial außerhalb der Stators angeordnet.

Gemäß einen Ausführungsform der Erfindung ist ein Sekundärteil des Torquemotors auf der ersten Gewindemutter angeordnet und/oder das erste Gehäuseelement weist eine zylindrische Öffnung auf, auf deren Innenmantelfläche ein Primärteil des Torquemotors angeordnet ist. Es handelt sich hierbei um einen Innenläufer, da der Rotor, hier die Gewindemutter, innerhalb des Stators, hier das erste Gehäuseelement, angeordnet ist. Der erste Torquemotor soll dabei möglichst rotationssymmetrisch gestaltet sein, so dass dieser entsprechend in der zylindrischen Öffnung des ersten Gehäuseelements untergebracht werden kann. Denkbar ist auch, dass das Primärteil und/oder das Sekundärteil durch kreissegmentförmige Segmente gebildet werden. Die zylindrische Öffnung kann dabei einen wesentlichen Teil des ersten Gehäuseelements bildet, d.h. das erste Gehäuseelement besteht in diesem Fall im Wesentlichen aus einem Hohlzylinder. Denkbar ist auch, dass die zylindrische Öffnung nur einen Teil des ersten Gehäuseelementes ausbildet. Dabei gilt grundsätzlich für alle Verkörperungen der vorliegenden Erfindung, dass das erste Gehäuseelement geschlossen, halboffen oder offen ausgebildet sein kann und im Wesentlichen als Bezugspunkt für die Bewegung des Arbeitselements dient.

Gemäß einer weiteren Ausführungsform der der Erfindung wird das Sekundärteil durch umfänglich auf der ersten Gewindemutter angeordnete Permanentmagnete gebildet und/oder das Primärteil wird durch umfänglich auf der Innenmantelfläche der Öffnung angeordnete Spulen gebildet. Indem der Rotor, d.h. die Gewindemutter, mit dem Sekundärteil kombiniert wird, kann auf den Einsatz von Schleifkontakten verzichtet werden. Insbesondere kann es sich um einen permanentmagneterregten Synchronmotor handeln. Bei den Permanentmagneten kann es sich um Magnete auf Basis von seltenen Erden handeln.

Gemäß einer weiteren Ausführungsform der der Erfindung ist die axiale Erstreckung des Primärteils und des Sekundärteils gleichlang. Die erfindungsgemäßen Vorteile kommen somit vollständig zum tragen, auch wenn aus konstruktions- oder fertigungstechnischen Gründen geringfügige Unterschiede dieser axialen Erstreckungen vorstellbar wären und im Rahmen der Erfindung liegen.

Gemäß einer weiteren Ausführungsform der der Erfindung ist der zweite Motor ein zweiter Torquemotor. Dieser kann grundsätzlich wie der erste Torquemotor aufgebaut sein. Da durch den mit der ersten Gewindespindel und der ersten Gewindemutter gekoppelten ersten Motor bereits eine lineare Bewegung ermöglicht wird, kann der zweite Motor ausschließlich zur Erzeugung einer Rotationsbewegung eingesetzt werden.

Erfindungswesentlich ist, dass der zweite Motor mit einer zweiten Gewindespindel und einer zweiten Gewindemutter gekoppelt, wobei die zweite Gewindemutter bezüglich dem ersten Gehäuseelement axial verschiebefest angeordnet ist und drehfest mit dem Primärteil oder dem Sekundärteil des zweiten Motors gekoppelt ist. Auch durch diese Ausführungsform wird erreicht, dass die erfindungsgemäßen Vorteile, die bereits beim ersten Motor zum tragen kamen, auch beim zweiten Motor zur Geltung kommen. Vorteilhaft hierbei ist auch, dass beide Motoren sehr ähnlich, beziehungsweise baugleich, aufgebaut sein können. Zu beachten ist, dass hierbei die Rotationsbewegung und die lineare Bewegung des Arbeitselements nicht voneinander unabhängig ist. Vielmehr werden beide Bewegungen jeweils durch eine überlagerte Ansteuerung der beiden Motoren erzeugt. Denkbar ist dabei, dass ein Gewinde der ersten Gewindespindel und ein Gewinde der zweiten Gewindespindel gegenläufig ausgebildet sind. In diesem Fall kann eine reine Rotation des Arbeitselements dadurch erreicht werden, dass beide Motoren und somit beide Gewindemuttern mit der gleichen Drehzahl gleichsinnig rotieren. Eine reine lineare Bewegung des Arbeitselements kann in diesem Fall dadurch erreicht werden, dass beide Motoren und somit beide Gewindemuttern gegenläufig mit der gleichen Drehzahl rotieren. Ähnlich dem Aufbau des ersten Torquemotors kann auch der zweite Motor ein Torquemotor sein, dessen Sekundärteil auf der zweiten Gewindemutter angeordnet ist und/oder das erste Gehäuseelement eine zylindrische Öffnung aufweisen, auf deren Innenmantelfläche ein Primärteil des zweiten Torquemotors angeordnet ist. Insbesondere kann das Sekundärteil des zweiten Torquemotors durch umfänglich auf der zweiten Gewindemutter angeordnete Permanentmagnete gebildet werden und/oder das Primärteil des zweiten Torquemotors durch umfänglich auf der Innenmantelfläche der Öffnung des ersten Gehäuseelements angeordnete Spulen gebildet werden.

Gemäß einer Ausführungsform der Erfindung ist mindestens ein Weg-und/oder Winkelmesssystem vorhanden. Das Weg- und/oder Winkelmesssystem kann beispielsweise ein kombiniertes, magnetoresistives oder induktives Winkel- und/oder Wegmesssystem sein. Es umfasst zumindest eine Maßverkörperung, z.B. mit Nuten sowohl in Längsrichtung als auch in Umfangsrichtung, sowie zumindest einen Abtastkopf, in dem die entsprechende Sensorik untergebracht ist.

Gemäß einer weiteren Ausführungsform der Erfindung ist ein Drehmoment-oder Kraftmesssystem, umfassend eine Strommesseinrichtung, vorhanden. Insbesondere soll das Drehmoment- oder Kraftmesssystem ohne entsprechende Sensorik und ohne Drehmomentbegrenzungskupplungen ausgebildet sein. Dies wird erfindungsgemäß dadurch erreicht, dass der Stromistwert aus dem jeweiligen Stromregelkreis, der als kaskadierter Strom-, Geschwindigkeits- und Lageregelkreis von Haus aus vorhanden ist, gemessen und überwacht wird. Dabei wird ausgenutzt, dass bei Servoantrieben der Stromistwert proportional der jeweiligen Motorkraft beziehungsweise dem jeweiligen Motormoment ist. Hierbei wird ein Unterschreiten eines Grenzwertes für den Stromistwert als nicht ordnungsgemäß verschraubte Elemente, z.B. Verschlusskappen für Getränkebehältnisse, interpretiert. Demgegenüber wird ein Überschreiten eines höheren Grenzwertes als zu fest verschraubte Elemente gedeutet. Das Motormoment M steht über eine Momentenkonstante KM wie folgt mit dem Motorstrom I in Verbindung: M = KM * I. Die Motorkraft F steht über eine Kraftkonstante KF wie folgt mit dem Motorstrom I in Verbindung: F = KF * I.

Gemäß einer weiteren Ausführungsform der Erfindung ist mindestens ein Radial- und/oder Axiallager zur Lagerung der ersten Gewindespindel und/oder der zweiten Gewindespindel und/oder des Arbeitselements vorhanden. Das Radial- und/oder Axiallager dient dazu, die genannten Maschinenelemente gegenüber dem ersten oder zweiten Gehäuseelement derart zu lagern, dass diese Maschinenelemente eine Rotationsbewegung durchführen können. Das Radial- und/oder Axiallager kann beispielsweise ein Gleitlager oder ein Wälzlager sein. Insbesondere kann es sich um einen Schrägkugellager z.B. ein zweireihiges Schrägkugellager handeln. Auch wenn eine einzige Lagerstelle mit z.B. einem zweireihigen Schrägkugellager ausreichend ist, umfasst die erfindungsgemäße Antriebseinheit in der Regel zwei Lagerstellen. Wälzlager werden vorzugsweise vorgespannt, um das radiale Spiel und die sich daraus ergebenden Schwingungen zu reduzieren, wodurch der Verschleiß verringert wird, und um außerdem die Genauigkeit zu steigern.

Gemäß einer weiteren Ausführungsform der Erfindung sind das Arbeitselement und/oder die erste Gewindespindel und/oder die zweite Gewindespindel zu der dem ersten Motor abgewandten Seite hin abgedichtet. Es kann sich hierbei um eine schleifende, berührende Wellendichtung oder eine berührungslose Labyrinthdichtung handeln. Die erfindungsgemäße Antriebseinheit kann somit auf einfache Weise wirkungsvoll gereinigt werden.

Gemäß einer weiteren Ausführungsform der Erfindung ist eine von dem ersten Motor und dem zweiten Motor unabhängige Bremse vorhanden. Diese ist insbesondere für den Fall notwendig, dass die erfindungsgemäße Antriebseinheit vertikal angeordnet werden soll. Für den Fall eines Not-Aus oder eines Spannungsabfall soll eine eigensichere, kraftschlüssige Bremsung erfolgen. Hierbei kann es sich um eine elektrische, hydraulische, pneumatische oder gegen eine Federkraft vorgespannte Bremse handeln. Alternativ kann auch anstelle einer Bremse ein Gewichtsausgleich mittels eines Gegengewichtes oder mittels einer Feder oder Gasdruckfeder realisiert werden. Möglich sind auch Bremssysteme, deren Funktionsweise auf der Anziehungskraft von Permanentmagneten beruht. Bei derartigen Systemen ist keine Energieversorgung (Strom, Druckluft etc.) notwendig, d.h. auch diese Systeme können als Sicherheitsvorrichtung bei plötzlichem Spannungsabfall eingesetzt werden.

Gemäß einer weiteren Ausführungsform der Erfindung ist zumindest einer der Motoren ein elektrischer Servomotor. Das heißt, die dem Motor zugehörige Steuerung und der zugehörige Umrichter sind innerhalb der Motorengehäuse integriert. Insbesondere wenn mehrere erfindungsgemäße Antriebseinheiten auf einem gemeinsamen, sich drehenden Maschinenteil angeordnet werden, können dadurch aufwändige Schleifringe vermieden werden. Alternativ kann Steuerung und Umrichter außerhalb des Motorengehäuses und insbesondere dem Arbeitselement abgewandt und ggf. mit dem Motorengehäuse verbunden angeordnet sein. Die elektronischen Baugruppen der Steuerung und der Umrichter sollen in einem weitgehend wasserdichten und druckdichten Edelstahlgehäuse untergebracht beziehungsweise geschützt sein, so dass Reinigung- und Desinfektionsflüssigkeiten bzw. Gase nicht hineingelangen können.

Gemäß einer weiteren Ausführungsform der Erfindung ist das Arbeitselement mit einem Verschließkopf für Getränkebehälter koppelbar. Der Verschließkopf wird für die jeweiligen Getränkebehälter angepasst und kann einfach ausgewechselt werden. Gemäß einer weiteren Ausführungsform weist zumindest das Arbeitselement eine Bohrung zum Ausstoßen von im Verschließkopf befindlichen Verschlusskappen auf. Ein entsprechender Ausstoßer kann durch die Bohrung hindurch nicht ordnungsgemäß verschraubte Verschlusskappen ausstoßen. Gegebenenfalls weisen auch die erste und/oder die zweite Gewindespindel beziehungsweise weitere Maschi-nenelemente eine entsprechende Bohrung auf.

### Kurze Beschreibung der Zeichnungen

Ausführungsbeispiele der vorliegenden Erfindung werden im Folgenden anhand der beigefügten Figuren erläutert. Hierbei zeigen
- Fig. 1: eine Antriebseinheit, die nicht zur Erfindung gehört
- Fig. 2: eine Antriebseinheit gemäß der GB-A-2097197,
- Fig. 3: eine Antriebseinheit gemäß der Erfindung,
- Fig. 4: eine weitere Antriebseinheit, die nicht zur Erfindung gehört
- Fig. 5: eine weitere Antriebseinheit, die nicht zur Erfindung gehört und
- Fig. 6: noch eine Antriebseinheit, die nicht zur Erfindung gehört

### Detaillierte Beschreibung der Zeichnung

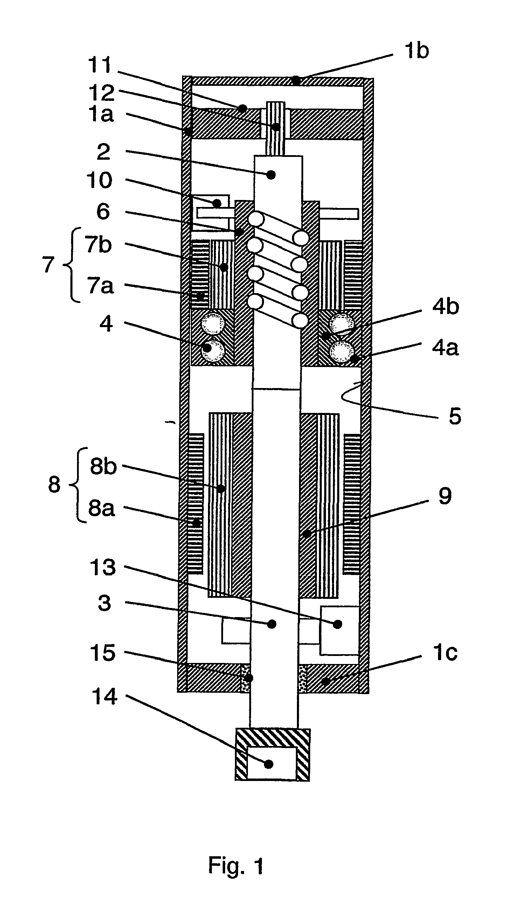

Fig. 1 zeigt eine Antriebseinheit, die nicht zur Erfindung gehört. In einem Gehäuse 1 aus Edelstahl sind als zentrale Elemente eine erste Gewindespindel 2 sowie ein Arbeitselement 3 angeordnet. Bei der Gewindespindel 2 kann es sich um eine Kugelrollspindel, eine Rollengewinde- oder eine Trapezgewindespindel handeln. Das Arbeitselement 3 besteht aus einer rotationssymmetrischen Welle, die koaxial zur ersten Gewindespindel 2 angeordnet ist. Die erste Gewindespindel 2 und das Arbeitselement 3 sind miteinander drehfest und verschiebefest verbunden, z.B. verschraubt, geklemmt oder auf andere Art und Weise kraftschlüssig, formschlüssig oder stoffschlüssig verbunden. Der ersten Gewindespindel 2 zugeordnet ist eine erste Gewindemutter 6. Die erste Gewindemutter 6 ist durch ein vorgespanntes Wälzlager 4 in dem ersten Gehäuseelement 1 drehbar gelagert. Hierzu ist die erste Gewindemutter 6 mit dem Innenring 4b des Wälzlagers 4 drehfest und verschiebefest verbunden. Bei dem Wälzlager 4 handelt es sich um ein mehrreihiges Wälzlager, nämlich ein zweireihiges Schrägkugellager. Der Außenring 4a des Wälzlagers 4 ist durch eine Presspassung an der Innenmantelfläche 5 des ersten Gehäuseelements 1 drehfest und verschiebefest angeordnet.

Der erste Motor 7, bestehend aus einem Primärteil 7a und einem Sekundärteil 7b, ist zwischen der ersten Gewindemutter 6 und dem ersten Gehäuseelement 1 angeordnet. Insbesondere ist das Primärteil 7a drehfest und verschiebefest auf der Innenmantelfläche 5 des ersten Gehäuseelement 1 angeordnet. Das Sekundärteil 7b ist demgegenüber auf der ersten Gewindemutter 6 drehfest und verschiebefest angeordnet und zwischen dem Primärteil 7a und dem Sekundärteil 7b wird der Luftspalt des ersten Motors 7 ausgebildet. Der erste Motor 7 erzeugt durch Antreiben der Gewindemutter 6 eine Linearbewegung des Arbeitselements 3. Bezüglich des ersten Gehäuseelements 1 ist sowohl das Primärteil 7a als auch das Sekundärteil 7b axial verschiebefest angeordnet, d.h. Primärteil 7a und Sekundärteil 7b sind auch zueinander axial verschiebefest angeordnet.

Der zweite Motor 8, bestehend aus Primärteil 8a sowie Sekundärteil 8b, ist zwischen dem Arbeitselement 3 und dem ersten Gehäuseelement 1 angeordnet. Während das Primärteil 8a direkt mit dem ersten Gehäuseelement 1 drehfest und verschiebefest verbunden ist, ist das Sekundärteil 8b mit dem Arbeitselement 3 über ein Adapterelement 9 drehfest und verschiebefest verbunden. Das Adapterelement 9 wird durch eine Hülse gebildet. Denkbar ist grundsätzlich auch eine direkte Verbindung von Sekundärteil 8b und Arbeitselement 3. Damit die axiale Überdeckung zwischen Primärteil 8a und Sekundärteil 8b auch bei einem linearen Verfahren des Arbeitselements 3 gleich groß bleibt, um die drehmomentebildende Luftspaltfläche konstant zu halten, ist die axiale Erstreckung des Sekundärteils 8b größer als die axiale Erstreckung des Primärteils 8a. Denkbar wäre auch, dass die axiale Erstreckung des Sekundärteils 8b kleiner als die axiale Erstreckung des Primärteils 8a ist. Der zweite Motor 8 erzeugt eine Drehbewegung des Arbeitselements 3, die jedoch ohne entsprechende entgegenwirkende Korrekturbewegungen der Gewindemutter 6 auch zu einer Linearverschiebung des Arbeitselements 3 führt. Die beiden Bewegungsmöglichkeiten sind somit nicht voneinander unabhängig.

Die Drehung der Gewindespindel 2 wird durch das Winkelmesssystem 10 erfasst. Die Winkellage des Arbeitselements 3 wird durch ein weiteres Winkelmesssystem 11 mit einer Maßverkörperung 12 erfasst, welches bezüglich Linearbewegungen unempfindlich ist.

Eine Sicherheitsbremse 13, die von dem ersten und dem zweiten Motor unabhängig arbeitet, ist mit dem Arbeitselement 3 gekoppelt. Anstelle der Sicherheitsbremse 13 kann auch eine vorgespannte Druckfeder als Sicherung gegen Absturz bei Stromausfall oder anderen Maschinenstörungen und zur Kompensation der Gewichtskraft eingesetzt werden.

An dem den Motoren abgewandten Ende des Arbeitselements 3 ist ein Verschlusselement 14 angeordnet, welches auf die Verschlüsse der jeweiligen Getränkebehälter abgestimmt ist. Das Arbeitselement 3 ist an seinem den Motoren abgewandten Ende mit einer Dichtung 15 versehen, um das Eindringen von Verunreinigungen in das erste Gehäuseelement 1 zu vermeiden.

Vorzugsweise weist das erste Gehäuseelement 1 eine rotationssymmetrische Gehäuseoberfläche mit wenigen beziehungsweise keinen Hinterschneidungen, Öffnungen oder Bohrungen auf. Es kann dadurch sehr gut und auf einfache Weise wirkungsvoll gereinigt werden. Alle Gehäusebauteile, das Arbeitselement, Schrauben und Kabelverschraubungen sind aus säure- und laugenbeständigem austenitischem Stahl gefertigt.

Gleiche oder gleichwirkende Elemente in den folgenden Figuren sind mit identischen Bezugszeichen versehen so dass diesbezüglich auf die Beschreibung zu Figur 1 verwiesen wird.

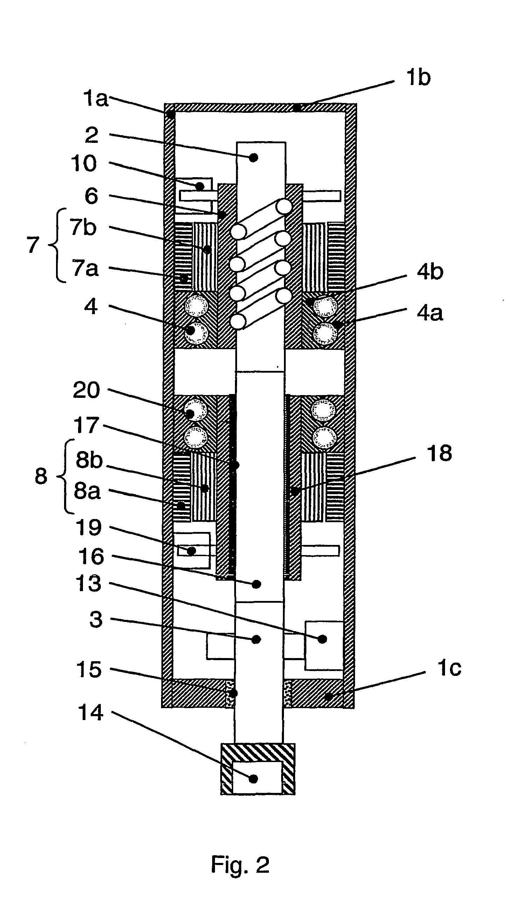

Fig. 2 zeigt eine Antriebseinheit gemäßGB 2097197 . Das Arbeitselement 3 ist drehfest und axial verschiebefest mit einer Vierkant- oder Polygonwelle 16 verbunden, die wiederum in einem so genannten Linearlager 17 geführt wird. Das Linearlager 17 umfasst eine mit Kugelreihen ausgestattete Verschiebehülse 18 und ist so gestaltet, dass es eine lineare Bewegung reibungsarm zulässt und über die Kugelreihen formschlüssig eine rotative Bewegung durch das Sekundärteil 8b des zweiten Motors 8 in die Vierkant- oder Polygonwelle 16 eingeprägt werden kann. Um eine reine Linearbewegung des Arbeitselements 3 zu bewirken, treibt der erste Motor 7 die Gewindemutter 6 an und der zweite Motor 8 erzeugt gleichzeitig ein entsprechendes Gegendrehmoment, damit die Drehung der Gewindemutter 6 nur in eine Linearbewegung des Arbeitselements 3 umgesetzt wird. Das Primärteil 8a des zweiten Motors 8 ist drehfest und axial verschiebefest mit dem ersten Gehäuseelement 1 verbunden. Das Sekundärteil 8b des zweiten Motors 8 ist drehfest und axial verschiebefest mit der Verschiebehülse 18 verbunden. Durch die Verschiebehülse 18, können das Primärteil 8a und das Sekundärteil 8b in axialer Erstreckung gleich lang ausgebildet werden.

Das Sekundärteil 8b, d.h. der Rotor, dessen Winkellage über einen Winkelmesssystem 19 erfasst wird, ist mittels der Verschiebehülse 18 in einem Radial-/Axiallager 20 gelagert. Das Radial-/Axiallager 20 ist im wesentlichen wie das Radial-/Axiallager 4 ausgebildet. Selbstverständlich können die Anbringungsorte des ersten Motors und des zweiten Motors miteinander vertauscht werden.

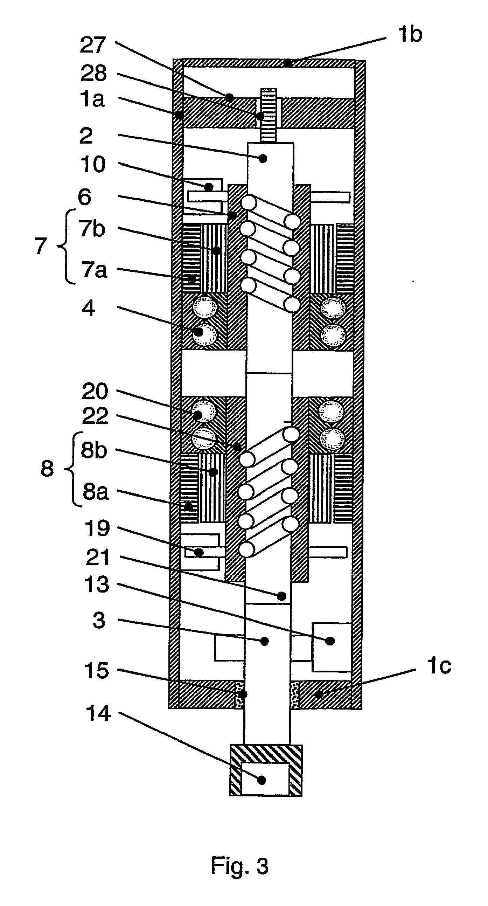

Fig. 3 zeigt eine Antriebseinheit gemäß der Erfindung. Das Arbeitselement 3 ist drehfest und axial verschiebefest mit einer zweiten Gewindespindel 21 verbunden. Die zweite Gewindespindel 21 steht mit einer zweiten Gewindemutter 22 im Eingriff. Bei der zweiten Gewindespindel 21 kann es sich wiederum um eine Kugelrollspindel, eine Rollengewinde- oder eine Trapezgewindespindel handeln. Die zweite Gewindespindel 21 ist drehfest und axial verschiebefest mit der ersten Gewindespindel 2 gekoppelt. Die Anordnung des zweiten Motors 8 bezüglich des ersten Gehäuseelement 1 und der zweiten Gewindemutter 22 entspricht im wesentlichen der Anordnung des ersten Motors 7 bezüglich dem ersten Gehäuseelement 1 und der ersten Gewindemutter 6. Demzufolge ist das Primärteil 8a drehfest und axial verschiebefest mit dem ersten Gehäuseelement 1 verbunden und das Sekundärteil 8b drehfest und verschiebefest mit der zweiten Gewindemutter 22 verbunden. Die Gewindespindeln weisen unterschiedlich drehende Gewindegänge auf. Mittels jeweils eines Winkelmesssystems 10,19 in Hohlwellenausführung wird die Winkellage der Sekundärteile 7b, 8b, d.h. der Rotoren, und der Gewindemuttern 6,22 erfasst und die Motoren 7,8 kommutiert und geregelt. Darüber hinaus kann auch ein einziger Winkelgeber ausreichend sein, mithilfe dessen die Winkellage der Gewindespindeln erfasst wird. Zusätzlich ist noch ein Wegmesssystem 27 mit einer Maßverkörperung 28 integriert, mit Hilfe dessen die lineare Verfahrposition der ersten Spindel 2, der zweiten Spindel 21 und des Arbeitselementes 3 erfasst werden kann und das bezüglich Drehbewegungen unempfindlich ist.

Vorteilhafterweise kann die Baugruppe umfassend ersten Motor 7, erste Gewindespindel 2, erste Gewindemutter 6, Radial-/Axiallager 4 baugleich zur Baugruppe umfassend zweiten Motor 8, zweite Gewindespindel 21, zweite Gewindemutter 22, Radial-/Axiallager 20 ausgebildet werden. Insbesondere kann es sich bei den Motoren 7, 8 um baugleiche Torquemotoren handeln.

Die Rotations- und die Linearbewegung des Arbeitselements 3 sind nicht voneinander unabhängig, sondern werden durch jeweils eine überlagerte Ansteuerung der beiden Gewindemuttern 6, 22 erzeugt.

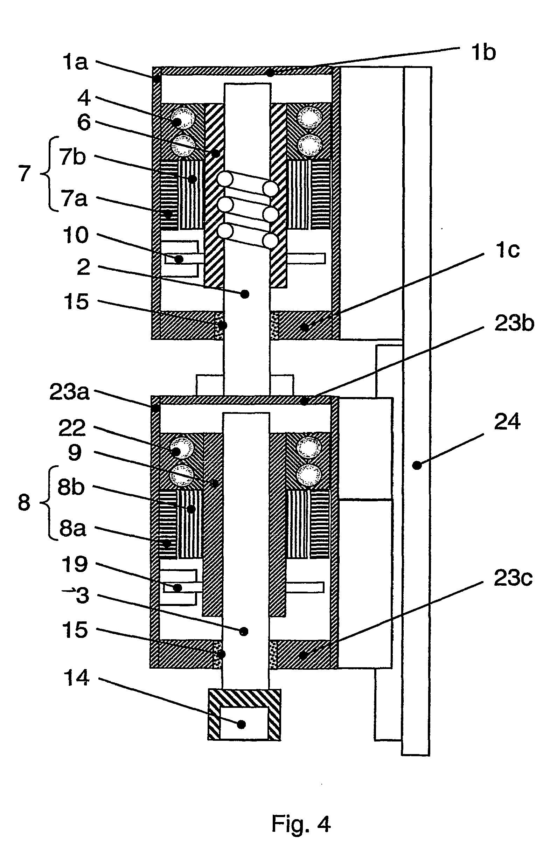

Figur 4 zeigt eine Antriebseinheit, die nicht zur Erfindung gehört. Die lineare Bewegung der Arbeitselements 3 wird wie zum Beispiel gemäß dem Ausführungsbeispiel nach Figur 2 durch den ersten Motors 7 sowie eine erste Gewindespindel 2 und eine erste Gewindemutter 6 bewirkt. Bezüglich des Aufbaus sowie der Anordnung des ersten Motors 7 wird daher auf die Beschreibung zur Figur 2 verwiesen. Der zweite Motor 8 ist in einem zweiten Gehäuseelement 23 untergebracht. Das zweite Gehäuseelement 23 weist wie das erste Gehäuseelement einen zylinderförmigen Hohlraum auf. Das zweite Gehäuseelement 23 ist mit der ersten Gewindespindel 2 drehfest und axial verschiebefest verbunden. Weiterhin ist das zweite Gehäuseelement 23 über eine Linearführung, bestehend aus einem Schlitten, der durch eine Kugel-oder Rollenumlauflinearführung geführt ist, drehfest mit einer Anschlusskonstruktion 24 verbunden. Das Arbeitselement 3 ist demgegenüber innerhalb des zweiten Gehäuseelement 23 drehbar aber axial verschiebefest gelagert. Dadurch wird sichergestellt, dass eine Drehbewegung der ersten Gewindemutter 6 ausschließlich eine lineare Bewegung des zweiten Gehäuseelements 23 und somit des Arbeitselements 3 bewirkt. Aufgrund der axialen Fixierung des Arbeitselements 3 innerhalb des zweiten Gehäuseelement 23 kann die axiale Erstreckung des Primärteils 8a sowie des Sekundärteils 8b des zweiten Motors 8 gleichlang ausgeführt werden. Das Sekundärteil 8b ist durch ein Adapterelement 9 mit dem Arbeitselement 3 drehfest und verschiebefest verbunden, wobei das Adapterelement 9 wiederum mit dem Arbeitselement 3 drehfest und verschiebefest verbunden ist. Durch ein Radial-/Axiallager 22 wird das Arbeitselement 3 in dem zweiten Gehäuseelement 23 gelagert. Der Innenring sowie der Außenring des Radial-/Axiallagers 22 ist drehfest und verschiebefest mit dem zweiten Gehäuseelement 23 beziehungsweise dem Adapterelement 9 verbunden.

Die Verbindung zwischen der ersten Gewindespindel 2 und dem zweiten
Gehäuseelement 23 kann derart gestaltet sein, dass ein einfacher Austausch einer der beiden Gehäuseelemente ermöglicht wird.

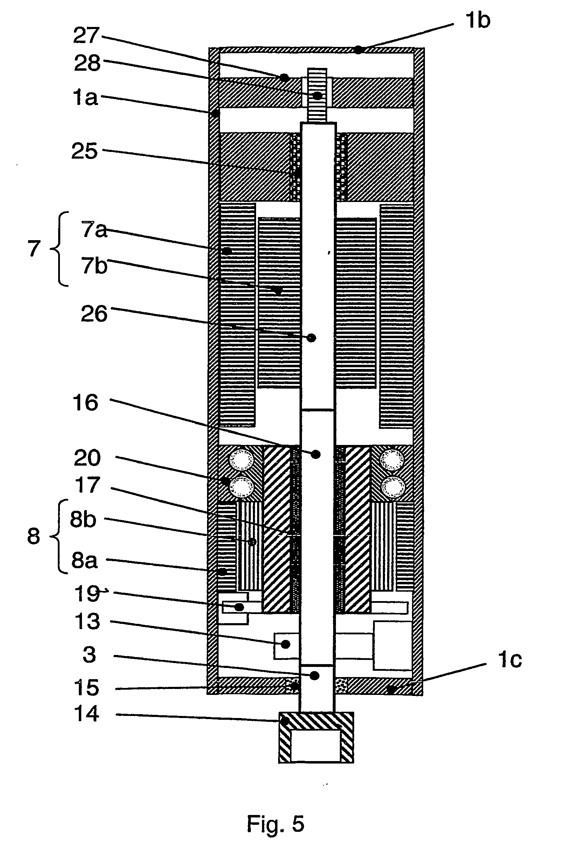

Figur 5 zeigt eine Antriebseinheit, die nicht zur Erfindung gehört. Der erste Motor 7, der durch einen Solenoidmotor gebildet wird, ist in einer Kugelbüchse 25 in dem ersten Gehäuseelement 1 gelagert. Das Sekundärteil 7b ist mit einer rotationssymmetrischen Welle 26 drehfest und axial verschiebefest verbunden. Der lineare Hub der Welle 26 und somit des ersten Motors 7 wird über ein Wegmesssystem 27 mit einer Maßverkörperung 28 gemessen. Dieses Wegmesssystem 27 ist so beschaffen, dass dadurch eine lineare Bewegung erfasst wird, dieses jedoch gegen eine Verdrehung unempfindlich ist. Um bei jeder möglichen axialen Position der Welle 26 eine ausreichende Überdeckung von Primärteil 7a und Sekundärteil 7b zu gewährleisten, ist entweder das Primärteil 7a länger ausgeführt als der Sekundärteil 7b oder umgekehrt, so dass damit die kraftbildende Luftspaltfläche in jeder Position konstant ist. Die Welle 26 ist drehfest und axial verschiebefest mit einer Vierkant- oder Polygonwelle 16 verbunden, die wiederum drehfest und axial verschiebefest mit dem Arbeitselement 3 verbunden ist. Die Vierkant- oder Polygonwelle 16 ist in einem Linearlager 17 geführt. Das Linearlager 17 umfasst eine mit Kugelreihen ausgestattete Verschiebehülse 18 und ist so gestaltet, dass es eine lineare Bewegung reibungsarm zulässt und über die Kugelreihen formschlüssig eine rotative Bewegung durch das Sekundärteil 8b des zweiten Motors 8 in die Vierkant- oder Polygonwelle 16 eingeprägt werden kann. In dieser Ausführungsform ist der lineare Freiheitsgrad von dem rotativen Freiheitsgrad entkoppelt. Der zweite Motor 8, ein Torquemotor, kann somit ein Primärteil 8a sowie ein Sekundärteil 8b mit gleichlanger axialer Erstreckung aufweisen. Denkbar ist natürlich auch eine vertauschte Anordnung von erstem und zweitem Motor.

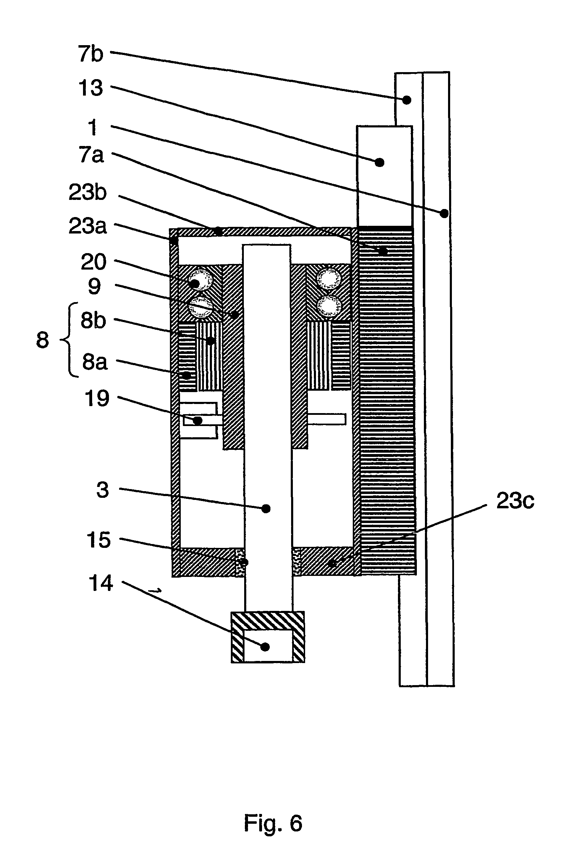

Figur 6 zeigt eine Antriebseinheit, die nicht zur Erfindung gehört. Der zweite Motor 8 ist in einem zweiten Gehäuseelement 23, das einen zylinderförmigen Hohlraum aufweist, untergebracht. Das zweite Gehäuseelement 23 ist gegenüber dem ersten Gehäuseelement 1 mittels eines Schlittens, der durch eine Kugel- oder Rollenumlauflinearführung geführt ist, drehfest aber linear verschieblich gelagert. Das Arbeitselement 3 ist wiederum in dem zweiten Gehäuseelement 23 axial verschiebefest aber drehbar gelagert. Eine lineare Bewegung des Arbeitselement 3 erfolgt somit ausschließlich durch Verschiebung des zweiten Gehäuseelements 23, was durch den ersten Motors 7 bewerkstelligt wird. Der Motor 7 besteht aus einem Primärteil 7a sowie einen Sekundärteil 7b. Das Primärteil 7a ist drehfest und axial verschiebefest mit dem zweiten Gehäuseelement 23 verbunden. Das Sekundärteil 7b ist drehfest und axial verschiebefest mit dem ersten Gehäuseelement 1 verbunden. Durch einen nicht dargestellten Linearmaßstab kann die lineare Bewegung gemessen und geregelt werden. Eine Sicherheitsbremse 13 ist in Form einer Klemmeinheit ausgebildet, um bei einem Not-Aus weitere lineare Bewegungen zu verhindern.

### Bezugszeichenliste

- 1: Gehäuseelement
- 2: Gewindespindel
- 3: Arbeitselement
- 4: Radial-/Axiallager
- 5: Innenmantelfläche
- 6: erste Gewindemutter
- 7: erster Motor
- 7a: Primärteil des ersten Motors
- 7b: Sekundärteil des ersten Motors
- 8: zweiter Motor
- 8a: Primärteil des zweiten Motors
- 8b: Sekundärteil des zweiten Motors
- 9: Adapterelement
- 10: Winkelmesssystem
- 11: Winkelmesssystem
- 12: Maßverkörperung
- 13: Sicherheitsbremse
- 14: Verschlusselement
- 15: Dichtung
- 16: Vierkant- oder Polygonwelle
- 17: Linearlager
- 18: Verschiebehülse
- 19: Winkelmesssystem
- 20: Radial-/Axiallager
- 21: zweite Gewindespindel
- 22: zweite Gewindemutter
- 23: zweites Gehäuseelement
- 24: Anschlusskonstruktion

- 25: Kugelbüchse
- 26: Welle
- 27: Wegmesssystem
- 28: Maßverkörperung

## Patentansprüche

1. Antriebseinheit zum rotativen und linearen Bewegen eines Arbeitselements (3) gegenüber einem ersten Gehäuseelement (1), wobei die Antriebseinheit einen ersten und einen zweiten Motor (7, 8) und Lagermittel (2, 6) umfasst, die es dem ersten und/oder dem zweiten Motor (7, 8) ermöglichen, dass bei linearer Bewegung des Arbeitselements (3) gegenüber dem ersten Gehäuseelement (1) ein Primärteil (7a, 8a) und ein Sekundärteil (7b, 8b) dieses Motors (7, 8) zueinander axial verschiebefest angeordnet sind, **dadurch gekennzeichnet, dass** die Lagermittel eine erste Gewindespindel (2) und eine erste Gewindemutter (6) sowie eine zweite Gewindespindel (21) und eine zweite Gewindemutter (22) umfassen, wobei alle Gewindemuttern (6, 22) bezüglich dem ersten Gehäuseelement (1) axial verschiebefest angeordnet und drehfest mit dem Primärteil (7a, 8a) oder dem Sekundärteil (7b, 8b) des jeweiligen Motors (7, 8) gekoppelt sind.

2. Antriebseinheit nach Anspruch 1, **dadurch gekennzeichnet, dass** ein Gewinde der ersten Gewindespindel (2) und ein Gewinde der zweiten Gewindespindel (21) gegenläufig ausgebildet sind.

3. Antriebseinheit nach Anspruch 2, **dadurch gekennzeichnet, dass** der erste Motor (7) ein erster Torquemotor und/oder der zweite Motor (8) ein zweiter Torquemotor ist.

4. Antriebseinheit nach einem der vorangegangen Ansprüche , **dadurch gekennzeichnet, dass** der zweite Motor (8) in einem vom ersten Gehäuseelement (1) separaten, zweiten Gehäuseelement (23) angeordnet ist, wobei das zweite Gehäuseelement (23) mit der ersten Gewindespindel (2) drehfest und axial verschiebefest verbunden ist.

5. Antriebseinheit nach Anspruch 1, **dadurch gekennzeichnet, dass** die Lagermittel ein vom ersten Gehäuseelement (1) separates, zweites Gehäuseelement (22) umfassen, wobei in dem zweiten Gehäuseelement (22) der zweite Motor (8) angeordnet ist und das zweite Gehäuseelement (22) gegenüber dem ersten Gehäuseelement (1) durch den ersten Motor (7) linear verfahrbar ist.

6. Antriebseinheit nach einem der vorangegangen Ansprüche, **dadurch gekennzeichnet, dass** mindestens ein Weg- und/oder Winkelmesssystem (10, 27) vorhanden ist.

7. Antriebseinheit nach einem der vorangegangen Ansprüche, **dadurch gekennzeichnet, dass** ein Drehmoment- oder Kraftmesssystem, umfassend eine Stromesseinrichtung, vorhanden ist.

8. Antriebseinheit nach einem der vorangegangen Ansprüche, **dadurch gekennzeichnet, dass** mindestens ein Radial- und/oder Axiallager (4, 20) zur Lagerung der ersten Gewindespindel (6) und/oder der zweiten Gewindespindel (22) und/oder des Arbeitselements (3) vorhanden ist.

9. Antriebseinheit nach einem der vorangegangen Ansprüche, **dadurch gekennzeichnet, dass** zumindest einer der Motoren (7, 8) ein elektrischer Servomotor ist.

10. Antriebseinheit nach einem der vorangegangen Ansprüche, **dadurch gekennzeichnet, dass** das Arbeitselement (3) mit einem Verschließkopf (14) für Getränkebehälter koppelbar ist.

11. Antriebseinheit nach Anspruch 10, **dadurch gekennzeichnet, dass** zumindest das Arbeitselement (3) eine Bohrung zum Ausstoßen von im Verschließkopf (14) befindlichen Getränkekappen aufweist.

## Claims

1. Drive unit for rotationally and linearly moving a working element (3) with respect to a first housing element (1), with the drive unit comprising a first and a second motor (7, 8) and bearing means (2, 6) which make it possible, in the case of the first and/or the second motor (7, 8), for a primary part (7a, 8a) and a secondary part (7b, 8b) of said motor (7, 8) to be arranged in an axially non-displaceable manner with respect to one another when the working element (3) is moved linearly in relation to the first housing element (1), **characterized in that** the bearing means comprise a first threaded spindle (2) and a first threaded nut (6) and also a second threaded spindle (21) and a second threaded nut (22), with all the threaded nuts (6, 22) being arranged in an axially non-displaceable manner in relation to the first housing element (1) and being coupled to the primary part (7a, 8a) or to the secondary part (7b, 8b) of the respective motor (7, 8) in a rotationally fixed manner.

2. Drive unit according to Claim 1, **characterized in that** a thread of the first threaded spindle (2) and a thread of the second threaded spindle (21) run in opposite directions.

3. Drive unit according to Claim 2, **characterized in that** the first motor (7) is a first torque motor and/or the second motor (8) is a second torque motor.

4. Drive unit according to one of the preceding claims, **characterized in that** the second motor (8) is arranged in a second housing element (23) which is separate from the first housing element (1), with the second housing element (23) being connected to the first threaded spindle (2) in a rotationally fixed and axially non-displaceable manner.

5. Drive unit according to Claim 1, **characterized in that** the bearing means comprise a second housing element (22) which is separate from the first housing element (1), with the second motor (8) being arranged in the second housing element (22) and the second housing element (22) being linearly moveable with respect to the first housing element (1) by the first motor (7).

6. Drive unit according to one of the preceding claims, **characterized in that** at least one travel and/or angle measuring system (10, 27) is present.

7. Drive unit according to one of the preceding claims, **characterized in that** a torque or force measuring system comprising a current measuring device is present.

8. Drive unit according to one of the preceding claims, **characterized in that** at least one radial and/or axial bearing (4, 20) for supporting the first threaded spindle (6) and/or the second threaded spindle (22) and/or the working element (3) is present.

9. Drive unit according to one of the preceding claims, **characterized in that** at least one of the motors (7, 8) is an electric servo motor.

10. Drive unit according to one of the preceding claims, **characterized in that** the working element (3) can be coupled to a closing head (14) for beverage containers.

11. Drive unit according to Claim 10, **characterized in that** at least the working element (3) has a hole for ejecting beverage caps which are located in the closing head (14).

## Revendications

1. Unité d'entraînement pour déplacer en rotation et en ligne un élément de travail (3) par rapport à un premier élément de carter (1), l'unité d'entraînement comprenant un premier et un deuxième moteur (7, 8) ainsi que des moyens de palier de roulement (2, 6) permettant, pour le premier et/ou le deuxième moteur (7, 8), à une partie principale (7a, 8a) et une partie secondaire (7b, 8b) de ce moteur (7, 8) d'être disposées solidairement en coulissement dans le plan axial l'une par rapport à l'autre en cas de mouvement linéaire de l'élément de travail (3) par rapport au premier élément de carter (1), **caractérisée en ce que** les moyens de palier de roulement comprennent une première broche de filetage (2) et un premier écrou de filetage (6) ainsi qu'une deuxième broche de filetage (21) et un deuxième écrou de filetage (22), tous les écrous de filetage (6, 22) étant disposés solidairement en coulissement dans le plan axial par rapport au premier élément de carter (1) et sont couplés solidairement en rotation à la partie principale (7a, 8a) ou à la partie secondaire (7b, 8b) du moteur (7, 8) respectif.

2. Unité d'entraînement selon la revendication 1, **caractérisée en ce qu'**un filet de la première broche de filetage (2) et un filet de la deuxième broche de filetage (21) sont réalisés dans des directions opposées.

3. Unité d'entraînement selon la revendication 2, **caractérisée en ce que** le premier moteur (7) est un premier moteur de couple et/ou le deuxième moteur (8) est un deuxième moteur de couple.

4. Unité d'entraînement selon l'une quelconque des revendications précédentes, **caractérisée en ce que** le deuxième moteur (8) est disposé dans un deuxième élément de carter (23) séparé du premier élément de carter (1), le deuxième élément de carter (23) étant relié solidairement en rotation et solidairement en coulissement dans le plan axial à la première broche de filetage (2).

5. Unité d'entraînement selon la revendication 1, **caractérisée en ce que** les moyens de palier de roulement comprennent un deuxième élément de carter (22) séparé du premier élément de carter (1), le deuxième moteur (8) étant disposé dans le deuxième élément de carter (22) et le deuxième élément de carter (22) pouvant être déplacé de façon linéaire par rapport au premier élément de carter (1) par le biais du premier moteur (7).

6. Unité d'entraînement selon l'une quelconque des revendications précédentes, **caractérisée par** la présence d'au moins un système de mesure de trajectoire et/ou d'angle (10, 27).

7. Unité d'entraînement selon l'une quelconque des revendications précédentes, **caractérisée par** la présence d'un système de mesure de couple de rotation ou de force comprenant un dispositif de mesure de flux.

8. Unité d'entraînement selon l'une quelconque des revendications précédentes, **caractérisée par** la présence d'au moins un palier de roulement radial et/ou axial (4, 20) pour le positionnement de la première broche de filetage (6) et/ou de la deuxième broche de filetage (22) et/ou de l'élément de travail (3).

9. Unité d'entraînement selon l'une quelconque des revendications précédentes, **caractérisée en ce qu'**au moins un des moteurs (7, 8) est un servomoteur électrique.

10. Unité d'entraînement selon l'une quelconque des revendications précédentes, **caractérisée en ce que** l'élément de travail (3) peut être couplé à une tête de fermeture (14) prévue pour un conteneur de boisson.

11. Unité d'entraînement selon la revendication 10, **caractérisée en ce qu'**au moins l'élément de travail (3) comporte un alésage conçu pour expulser les bouchons de boisson se trouvant dans la tête de fermeture (14).
